# EUROPEAN PATENT SPECIFICATION

(11) **EP 2 190 134 B1**
(45) Date of publication and mention of the grant of the patent: **06.07.2011**
(21) Application number: 09174376.5
(22) Date of filing: 28.10.2009
(51) Int. Cl.: H04B 7/185, H04L 27/34

(54) **Communication system and method of communicating signals**
Kommunikationssystem und Verfahren zur Signalkommunikation
Système de communication et procédé de communication de signaux

(30) Priority: 20.11.2008 US 313474
(43) Date of publication of application: 26.05.2010
(73) Proprietor: Delphi Technologies, Inc., Troy, MI 48007 (US)
(72) Inventor: Walker, Glenn A., Greentown, IN 46936 (US); Dibiaso, Eric A., Kokomo, IN 46901 (US)
(74) Representative: Denton, Michael John

(56) References cited:
- EP-A2- 1 536 574
- US-A1- 2006 239 365
- US-B1- 6 944 139

## Description

### Technical Field

The present invention generally relates to a communication system and method of communicating signals, and more particularly, a communication system and method of communicating signals having different content on the same frequency.

### Background of the Invention

Generally, vehicles can be equipped with satellite radio receivers as an alternative to, or in combination with, common traditional terrestrial radio receivers. Additionally, satellite radio receivers can be used in places other than vehicles, such as handheld devices. Generally, satellite radio systems are designed, such that the receiver receives a satellite radio frequency (RF) signal from a satellite and a terrestrial RF signal from a terrestrial repeater or a transponder, which typically provides system redundancy.

The current systems in operation in the U.S. generally use double redundant information to enable high signal availability to receivers. These systems typically use time and spatial redundancy for the satellite signals, such that the signal is transmitted from two sources. Typically, in urban areas, terrestrial repeaters can provide a third signal source. Generally, such systems use different frequencies for the satellite signal and the terrestrial repeater signal. This architecture generally reduces the bandwidth efficiency of the system by one-third (1/3), while increasing overall availability.

Due to current European regulations, the European satellite radio system currently has twenty-three (23) contiguous frequencies across a forty megahertz (40 MHz) frequency band. Generally, there are seven (7) frequencies that are designated for hybrid systems only, which include the transmission of the satellite RF signal and the terrestrial RF signal. Typically, the current European satellite radio system is constrained to frequency bandwidths of 1.712 MHz.

With multiple satellites, it can be a problem to receive signals from one satellite and then receive signals from another satellite at the same frequency due to the differing locations of the satellites with respect to the receiver. One exemplary system generally includes a receiver having an antenna element that receives signals at the same frequency, wherein the antenna element has a very high gain (e.g., beam steered). By including such a high gain antenna element, the signals can be separated, along with polarization. Typically, such an exemplary system transmits satellite television signals that are received by the antenna element.

Generally, a satellite that communicates a signal to a receiver from a service provider transmits the signal at a particular frequency, and a second satellite communicates another signal to another receiver from another service provider, wherein the signal is transmitted from the second satellite at another particular frequency different that the frequency used by the first satellite. Thus, two frequencies of the frequency spectrum are utilized to transmit different content. Further, if additional signals are to be transmitted with different content at different frequencies, more frequencies of the limited frequency spectrum are occupied, and cannot be utilized for other uses.

### Summary of the Invention

According to one aspect of the present invention, a communication system includes a first satellite orbiting in a first orbital path that communicates a first signal having a first content at a transmitting frequency while at a first elevation angle, a second satellite orbiting in a second orbital path that communicates a second signal having a second content at the transmitting frequency while at a second elevation angle, wherein the first elevation angle is greater than the second elevation angle, and at least one terrestrial repeater that communicates a hierarchical modulated signal, wherein a hierarchical primary of the hierarchical modulated signal corresponds to the second signal communicated from the second satellite, and a hierarchical secondary of the hierarchical modulated signal corresponds to the first signal communicated from the first satellite, such that the first and second signals are communicated at the same transmitting frequency.

According to another aspect of the present invention, a method of communicating signals having different content on the same transmitting frequency includes the steps of communicating a first signal having a first content at a transmitting frequency from a first satellite at a first elevation angle, communicating a second signal having a second content at the transmitting frequency from a second satellite at a second elevation angle, wherein the second elevation angle is lower than the first elevation angle, and communicating a hierarchical modulated signal from at least one terrestrial repeater, wherein a hierarchical primary of the hierarchical modulated signal corresponds to the second signal communicated from the second satellite, and a hierarchical secondary of the hierarchical modulated signal corresponds to the first signal communicated from the first satellite, such that the first and second signals are communicated at the same frequency.

### Brief Description of the Drawings

The present invention will now be described, by way of example, with reference to the accompanying drawings, in which:

Fig. 1 is an environmental view of a communications system that includes a communication device, in accordance with one embodiment of the present invention;

Fig. 2 is a diagram illustrating an exemplary orbital path of highly elliptical orbiting satellites, in accordance with one embodiment of the present invention;

Fig. 3 is a chart illustrating QPSK signals transmitted from satellites having different orbital paths, in accordance with one embodiment of the present invention;

Fig. 4 is a block diagram of a communication device, in accordance with one embodiment of the present invention;

Fig. 5 is a diagram illustrating the reception characteristics of signals having different polarizations and being received at different reception elevation angles with respect to at least one antenna element, in accordance with one embodiment of the present invention; and

Fig. 6 is a flow chart illustrating a method of communicating signals having different content on the same transmitting frequency, in accordance with one embodiment of the present invention.

### Description of the Preferred Embodiments

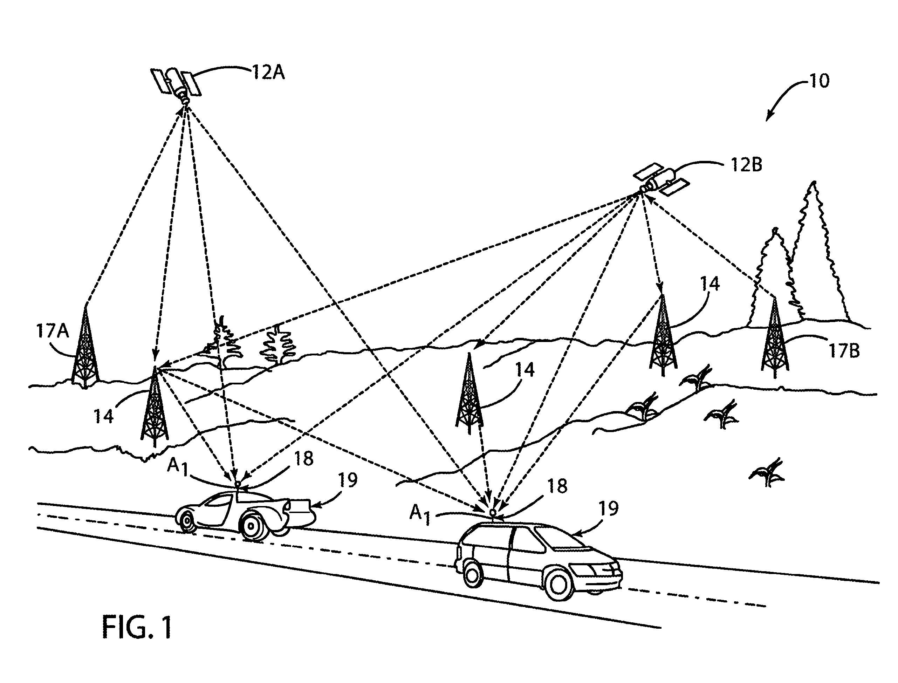

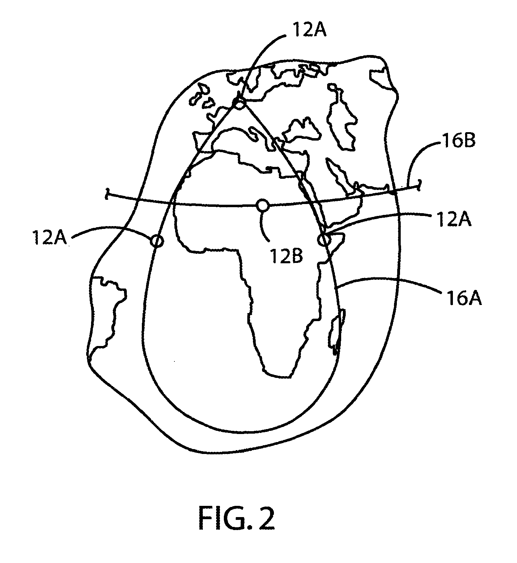

In regards to both Figs. 1 and 2, a communication system is generally shown at reference identifier 10. The communication system 10 includes a first satellite 12A, a second satellite 12B, and at least one terrestrial repeater 14 (Fig. 1). The first satellite 12A orbits in a first orbital path 16A, as shown in Fig. 2, and communicates a first signal having a first content at a transmitting frequency while at a first elevation angle. The second satellite 12B orbits in a second orbital path 16B, as shown in Fig. 2, and communicates a second signal having a second content at the transmitting frequency while at a second elevation angle. Typically, the first elevation angle is greater than the second elevation angle. Also, the first content is different than the second content, such that the first signal communicated from the first service provider 17A differs from a second signal communicated from a second service provider 17B, according to one embodiment.

The terrestrial repeater 14 communicates a hierarchical modulated signal, wherein a hierarchical primary of the hierarchical modulated signal corresponds to the second signal communicated from the second satellite 12B, and a hierarchical secondary of the hierarchical modulated signal corresponds to the first signal communicated from the first satellite 12A, such that the first and second signals are communicated at the same transmitting frequency, as described in greater detail herein.

The communication system 10 typically includes a receiver, generally indicated at 18, in communication with one of the first and second satellites 12A,12B, wherein the receiver 18 is configured to reject the signal communicated from the other of the first and second satellites 12A,12B. Thus, the first service provider 17A can provide content utilizing the first satellite 12A, while the second service provider 17B can provide different content utilizing a second satellite 12B, wherein the receiver 18 is configured to receive content from one of the service providers 17A,17B. Therefore, multiple service providers (17A,17B,...17_{N}) can provide different content utilizing the same transmitting frequency, and thus, expanding the amount of content that can be communicated in the frequency spectrum. According to one embodiment, the receiver 18 can be used with a vehicle generally indicated at 19.

According to one embodiment, the receiver 18 rejects the signal communicated from the other of the first and second satellites 12A,12B as a function of the first and second elevation angles. By way of explanation and not limitation, the first satellite 12A can be a highly elliptical orbiting (HEO) satellite having an elliptical orbiting path (e.g., the first orbital path 16A), and the second satellite 12B can be a geo-stationary (GEO) satellite having an orbital path substantially along the equator (e.g., the second orbital path 16B) (Fig. 2). In such an embodiment, there can be three first satellites 12A orbiting in the HEO orbital path 16A, wherein the first satellite 12A that is in the high position above the reception area is transmitting the signal, while the other satellites in the HEO orbital path 16A are turned off, so that the first satellite 12A transmitting the first signal has a higher elevation angle than the other satellites 12A in the HEO orbital path 16A and the transmitting second satellite 12B in the GEO orbital path 16B.

Due to the GEO orbital path 16B having a lower elevation angle for communicating the signal, typically more terrestrial repeaters 14 are utilized to retransmit the signal than the number of terrestrial_repeaters 14 that are utilized for retransmitting the signal retransmitted from the first satellite 12A. Typically, the signals transmitted from the second satellite 12B in the GEO orbital path 16B have more obstructions in the signal path, such as mountainous terrain and buildings in urban areas, which do not have such an effect on the signal transmitted from the first satellite 12A in the HEO orbital path 16A, which is at the higher elevation angle.

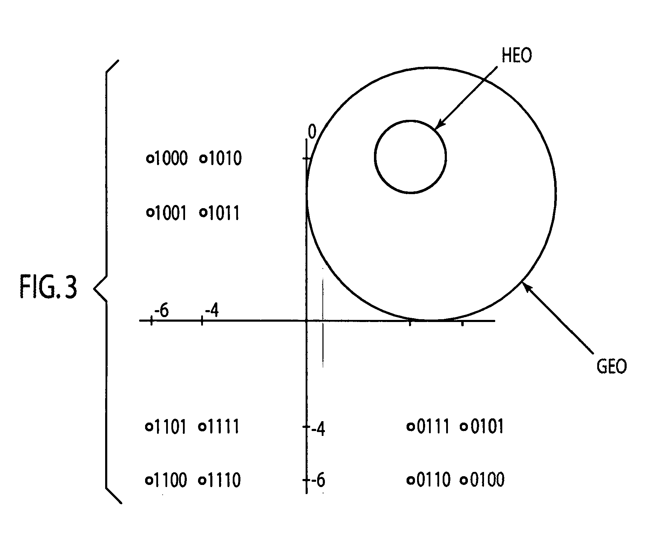

Since more terrestrial repeaters 14 are typically utilized to retransmit the signal from the second satellite 12B than the first satellite 12A, due to the lower elevation angle of the second satellite 12B, the hierarchical primary of the hierarchical modulated signal corresponds to the second signal communicated from the second satellite 12B, and the hierarchical secondary of the hierarchical modulated signal corresponds to the first signal communicated from the first satellite 12A. According to one embodiment, the hierarchical modulated signal communicated from the terrestrial repeater 14 appears as a sixteen (16) quadrature amplitude modulation (QAM) orthogonal frequency-division multiplexing (OFDM) constellation (Fig. 3). However, it should be appreciated by those skilled in the art that other suitable types of hierarchical modulated signals can be utilized for retransmission of signals from the first and second satellites 12A,12B and the terrestrial repeater 14.

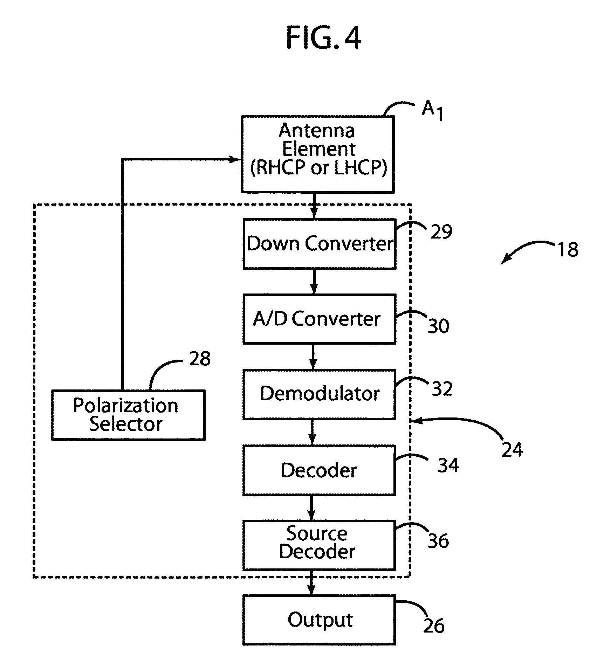

In regards to both Figs. 1 and 4, the receiver 18 can include at least one antenna element A₁ and circuitry generally indicated at reference identifier 24 (Fig. 4) that is in communication with the antenna element A₁, according to one embodiment.

For purposes of explanation and not limitation, in operation, the antenna element A₁ receives at least the first signal having a first polarization, while rejecting the second signal received from the second elevation angle having a second polarization, and the circuitry 24 is configured to process and emit an output 26 based upon the received first signal. In such an embodiment, the antenna element A₁, the circuitry 24, or a combination thereof, rejects one of the first and second signals as a function of the elevation angle and the polarization of the signal. Exemplary polarizations that may be utilized are right hand circular polarization (RHCP), left hand circular polarization (LHCP), linear polarization, the like, or a combination thereof, according to one embodiment. It should be appreciated by those skilled in the art that other suitable polarizations may be utilized when transmitting one or more signals.

Generally, an elevation angle can be the angle that a signal is received from the satellite (e.g., the first and second satellites 12A,12B) with respect to the antenna element A₁, according to one embodiment. By way of explanation and not limitation, the output 22 can be a video output, an audio output, the like, or a combination thereof. It should be appreciated by those skilled in the art that the at least one antenna element can include any number of suitable antenna elements (i.e., A₁,A₂,...A_{N},).

The receiver 18 can further include a polarization selector 28 in communication with the antenna element A₁, wherein the polarization selector 28 alters the polarization of the antenna element A₁, such that the antenna element A₁ is adapted to receive either the first signal having the first polarization received from the first elevation angle or the second signal having the second polarization received from the second elevation angle. Thus, a single receiver 18 can be configured to receive different content provided from different source providers 17A,17B.

Additionally, the receiver 18 can include at least one down converter 29 and at least one analog-to-digital (A/D) converter 30. Typically, the down converter 29 down converts or reduces a frequency of a radio frequency (RF) signal that is received by the antenna element A₁ to a lower frequency for transmission through the receiver 18, and the A/D converter 30 converts the analog signal received by the antenna element A₁ to a digital signal. The receiver 18 can fiuther include a demodulator 32 in communication with A/D converter 30 that is configured to demodulate the signal received by the antenna element A₁. Further, a decoder 34 can be in communication with the demodulator 32 and be configured to decode an output received form the demodulator 32, and a source decoder 36 can receive a decoded output of the decoder 34, such that the output 26 is emitted based upon the signal received by the antenna element A₁.

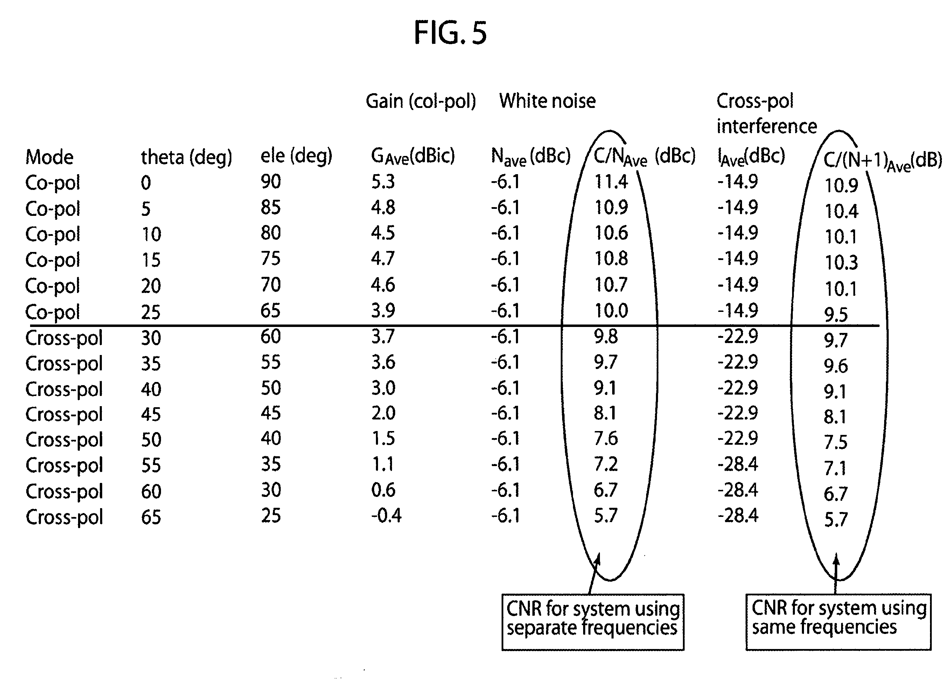

With respect to Fig. 5, this figure illustrates reception characteristics of signals having different polarizations and having different reception angles with respect to the at least one antenna element (A₁+A₂...A_{N}).

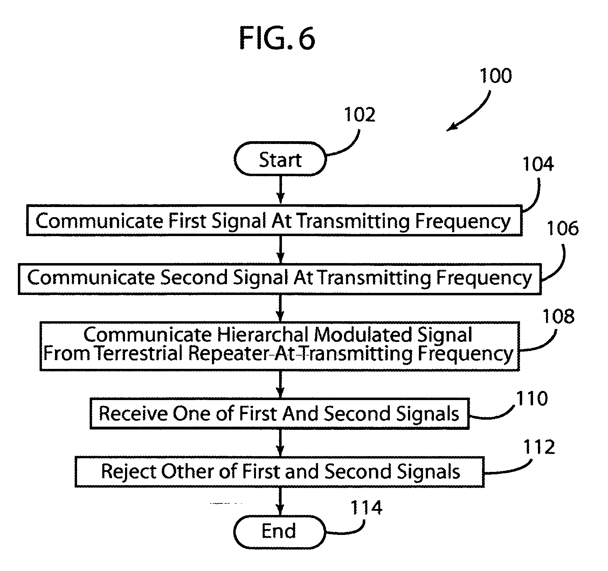

In regards to Figs. 1, 2, and 6, a method of communicating signals having different content on the same transmitting frequency is generally shown in Fig. 6 at reference identifier 100. The method 100 starts at step 102, and proceeds to step 104, wherein a first signal is communicated at a transmitting frequency. At step 106, a second signal is communicated at the transmitting frequency. Typically, the first and second signals have different content and are transmitted at different elevation angles, but are transmitted at the same transmitting frequency.

The method 100 then proceeds to step 108, wherein a hierarchical modulated signal is communicated from the terrestrial repeater 14 at the transmitting frequency. At step 110, one of the first and second signals is received by the receiver 18. At step 112, the other of the first and second signals is rejected by the receiver 18. Typically, the other of the first and second signals is rejected based upon the elevation angle of the transmitted signal, the polarization of the transmitted signal, or a combination thereof. The method 100 then ends at step 114.

Advantageously, the communication system 10 and method 100 allow for different service providers to provide different content on first and second signals, which are transmitted at the same frequency, and thus, expanding the use of the frequency spectrum. Since the first and second signals are communicated from first and second satellites 12A,12B, respectively, the signals can be rejected by the receiver 18 based upon the elevation angle. Thus, the signal to be rejected causes minimal interference to the signal that is to be received to produce the output 26. It should be appreciated by those skilled in the art that initial or alternative advantages may be present from the communication system 10 and method 100. It should further be appreciated by those skilled in the art that the above components can be combined in additional or alternative ways.

The above description is considered that of preferred embodiments only Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims, as interpreted according to the principles of patent law.

## Claims

1. A communication system (10) comprising:
a first satellite (12A) orbiting in a first orbital path (16A) that communicates a first signal having a first content at a transmitting frequency
a second satellite (12B) orbiting in a second orbital path (16B) that communicates a second signal having a second content at said transmitting frequency
; and
at least one terrestrial repeater (14) that communicates a hierarchical modulated signal, wherein a hierarchical primary of said hierarchical modulated signal corresponds to said second signal communicated from said second satellite (12B), and a hierarchical secondary of said hierarchical modulated signal corresponds to said first signal communicated from said first satellite (12A), such that said first and second signals are communicated at the same said transmitting frequency, the elevation angle of said first satellite being greater than the elevation angle of said second satellite at the location of said of leat one terrestrial repeater.

2. The communication system (10) of claim 1 further comprising a receiver (18) in communication with one of said first and said second satellites (12A,12B), wherein said receiver (18) is configured to reject said signal communicated from the other of said first and second satellites (12A,12B).

3. The communication system (10) of claim 2, wherein said receiver (18) rejects said signal communicated from the other of said first and second satellites (12A, 12B) as a function of said first and second elevation angles.

4. The communication system (10) of claims 2 or 3, wherein said receiver (18) is used with a vehicle (19).

5. The communication system (10) of any one of the preceding claims, wherein said first signal and said second signal have different polarizations.

6. The communication system (10) of any one of the preceding claims, wherein said first satellite (12A) is a highly elliptical orbiting (HEO) satellite.

7. The communication system (10) of any one of the preceding claims, wherein said second satellite (12B) is a geo-stationary (GEO) satellite.

8. The communication system (10) of any one of the preceding claims, wherein said hierarchical modulated signal communicated from said terrestrial repeater (14) appears as a sixteen (16) quadrature amplitude modulation (QAM) orthogonal frequency-division multiplexing (OFDM) constellation.

9. A method (100) of communicating signals having different content on the same transmitting frequency, said method (100) comprising:
communicating a first signal (104) having a first content at a transmitting frequency from a first satellite (12A);
communicating a second signal (106) having a second content at said transmitting frequency from a second satellite (12B)
; and
communicating a hierarchical modulated signal (108) from at least one terrestrial repeater (14), wherein a hierarchical primary of said hierarchical modulated signal corresponds to said second signal communicated from said second satellite (12B), and a hierarchical secondary of said hierarchical modulated signal corresponds to said first signal communicated from said first satellite (12A), such that said first and second signals are communicated at the same said frequency, the elevation angle of said first satellite being greater than the elevation angle of said second satellite at the location of said at least one terrestrial repeater.

10. The method (100) of communicating signals of claim 9 further comprising the steps of:
receiving one of said first and second signals (110); and
rejecting the other of said first and second signals (112) as a function of said elevation angles.

11. The method (100) of communicating signals of claims 9 or 10, wherein said first and second signal have different polarizations.

12. The method (100) of communicating signals of claims 9, 10, or 11, wherein said first satellite (12A) is a highly elliptical orbiting (HEO) satellite.

13. The method (100) of communicating signals of any one of claims 9 through 12, wherein said second satellite (12B) is a geo-stationary (GEO) satellite.

14. The method (100) of communicating signals of any one of claims 9 through 13, wherein said hierarchical modulated signal communicated from said terrestrial repeater (14) appears as a sixteen (16) quadrature amplitude modulation (QAM) orthogonal frequency-division multiplexing (OFDM) constellation.

15. The method (100) of communicating signals of any one of claims 9 through 14, wherein a receiver (18) receives one of said first and second signals (110), and is used with a vehicle (19).

## Patentansprüche

1. Kommunikationssystem (10), das aufweist:
einen ersten Satellit (12A), der in einer ersten Umlauf bzw. Orbitalbahn (16A) kreist, der ein erstes Signal mit einem ersten Inhalt an einer Sendefrequenz kommuniziert;
einen zweiten Satellit (12B), der in einer zweiten Umlaufbahn (16B) kreist, der ein zweites Signal mit einem zweiten Inhalt an der Sendefrequenz kommuniziert; und
zumindest einen terrestrischen Repeater (14), der ein hierarchisch moduliertes Signal kommuniziert, wobei ein hierarchisch primäres des hierarchisch modulierten Signals dem zweiten Signal entspricht, das von dem zweiten Satellit (12B) kommuniziert wird, und ein hierarchisch sekundäres des hierarchisch modulierten Signals dem ersten Signal entspricht, das von dem ersten Satellit (12A) kommuniziert wird, so dass die ersten und zweiten Signale an der gleichen Sendefrequenz kommuniziert werden, wobei der Elevationswinkel des ersten Satelliten größer ist als der Elevationswinkel des zweiten Satelliten an der Position des zumindest einen terrestrischen Repeaters.

2. Kommunikationssystem (10) gemäß Anspruch 1, das weiter aufweist einen Empfänger (18) in Kommunikation mit einem der ersten und zweiten Satelliten (12A, 12B), wobei der Empfänger (18) konfiguriert ist, das Signal zurückzuweisen, das von dem anderen der ersten und zweiten Satelliten (12A, 12B) kommuniziert wird.

3. Kommunikationssystem (10) gemäß Anspruch 2, wobei der Empfänger (18) das Signal zurückweist, das von dem anderen der ersten und zweiten Satelliten (12A, 12B) kommuniziert wird, als eine Funktion der ersten und zweiten Elevationswinkel.

4. Kommunikationssystem (10) gemäß den Ansprüchen 2 oder 3, wobei der Empfänger (18) mit einem Fahrzeug (19) verwendet wird.

5. Kommunikationssystem (10) gemäß einem der vorhergehenden Ansprüche, wobei das erste Signal und das zweite Signal unterschiedliche Polarisationen haben.

6. Kommunikationssystem (10) gemäß einem der vorhergehenden Ansprüche, wobei der erste Satellit (12A) ein stark elliptisch umkreisender (HEO - highly elliptical orbiting) Satellit ist.

7. Kommunikationssystem (10) gemäß einem der vorhergehenden Ansprüche, wobei der zweite Satellit (12B) ein geostationärer (GEO - geo-stationary) Satellit ist.

8. Kommunikationssystem (10) gemäß einem der vorhergehenden Ansprüche, wobei das hierarchisch modulierte Signal, das von dem terrestrischen Repeater (14) kommuniziert wird, als eine sechzehn (16) Quadrat-AmplitudenModulation(QAM - quadrature amplitude modulation)-Orthogonal-Frequenzmultiplex(OFDM - orthogonal frequency-division multiplexing)-Konstellation erscheint.

9. Verfahren (100) zum Kommunizieren von Signalen mit unterschiedlichem Inhalt auf der gleichen Sendefrequenz, wobei das Verfahren (100) aufweist:
Kommunizieren eines ersten Signals (104) mit einem ersten Inhalt an einer Sendefrequenz von einem ersten Satellit (12A);
Kommunizieren eines zweiten Signals (106) mit einem zweiten Inhalt an der Sendefrequenz von einem zweiten Satellit (12B); und
Kommunizieren eines hierarchisch modulierten Signals (108) von zumindest einem terrestrischen Repeater (14), wobei ein hierarchisch primäres des hierarchisch modulierten Signals dem zweiten Signal entspricht, das von dem zweiten Satellit (12B) kommuniziert wird, und ein hierarchisch sekundäres des hierarchisch modulierten Signals dem ersten Signal entspricht, das von dem ersten Satellit (12A) kommuniziert wird, so dass die ersten und zweiten Signale an der gleichen Frequenz kommuniziert werden, wobei der Elevationswinkel des ersten Satelliten größer ist als der Elevationswinkel des zweiten Satelliten an der Position des zumindest einen terrestrischen Repeaters.

10. Verfahren (100) zum Kommunizieren von Signalen gemäß Anspruch 9, das weiter die Schritte aufweist:
Empfangen eines der ersten und zweiten Signale (110); und
Zurückweisen des anderen der ersten und zweite Signale (112) als eine Funktion der Elevationswinkel.

11. Verfahren (100) zum Kommunizieren von Signalen gemäß den Ansprüchen 9 oder 10, wobei das erste und das zweite Signal unterschiedliche Polarisationen haben.

12. Verfahren (100) zum Kommunizieren von Signalen gemäß den Ansprüchen 9, 10 oder 11, wobei der erste Satellit (12A) ein stark elliptisch umkreisender (HEO - highly elliptical orbiting) Satellit ist.

13. Verfahren (100) zum Kommunizieren von Signalen gemäß einem der Ansprüche 9 bis 12, wobei der zweite Satellit (12B) ein geostationärer (GEO - geo-stationary) Satellit ist.

14. Verfahren (100) zum Kommunizieren von Signalen gemäß einem der Ansprüche 9 bis 13, wobei das hierarchisch modulierte Signal, das von dem terrestrischen Repeater (14) kommuniziert wird, als eine sechzehn (16) Quadrat-Amplituden-Modulation(QAM - quadrature amplitude modulation)-Orthogonal-Frequenzmultiplex(OFDM - orthogonal frequency-division multiplexing)-Konstellation erscheint.

15. Verfahren (100) zum Kommunizieren von Signalen gemäß einem der Ansprüche 9 bis 14, wobei ein Empfänger (18) eines der ersten und zweiten Signale (110) empfängt, und mit einem Fahrzeug (19) verwendet wird.

## Revendications

1. Système de communication (10) comprenant :
un premier satellite (12A) en orbite sur un premier trajet orbital (16A) qui communique un premier signal ayant un premier contenu à une fréquence de transmission ;
un second satellite (12B) en orbite sur un second trajet orbital (16B) qui communique un second signal ayant un second contenu à ladite fréquence de transmission ; et
au moins un répéteur terrestre (14) qui communique un signal hiérarchique modulé, dans lequel une composante primaire hiérarchique dudit signal hiérarchique modulé correspond audit second signal communiqué depuis ledit second satellite (12B), et une composante secondaire hiérarchique dudit signal hiérarchique modulé correspond audit premier signal communiqué depuis ledit premier satellite (12A), de telle façon que ledit premier et ledit second signal sont communiqués à ladite même fréquence de transmission, l'angle d'élévation dudit premier satellite étant supérieur à l'angle d'élévation dudit second satellite à l'emplacement dudit au moins un répéteur terrestre.

2. Système de communication (10) selon la revendication 1, comprenant en outre un récepteur (18) en communication avec un parmi ledit premier et ledit second satellite (12A, 12B), et dans lequel ledit récepteur (18) est configuré pour rejeter ledit signal communiqué depuis l'autre parmi ledit premier et ledit second satellite (12A, 12B).

3. Système de communication (10) selon la revendication 2, dans lequel ledit récepteur (18) rejette ledit signal communiqué depuis l'autre dudit premier et dudit second satellite (12A, 12B) en fonction dudit premier et dudit second angle d'élévation.

4. Système de communication (10) selon les revendications 2 ou 3, dans lequel ledit récepteur (18) est utilisé avec un véhicule (19).

5. Système de communication (10) selon l'une quelconque des revendications précédentes, dans lequel ledit premier signal et ledit second signal ont des polarisations différentes.

6. Système de communication (10) selon l'une quelconque des revendications précédentes, dans lequel ledit premier satellite (12A) est un satellite en orbite sur une orbite fortement elliptique (HEO).

7. Système de communication (10) selon l'une quelconque des revendications précédentes, dans lequel ledit second satellite (12B) est un satellite géostationnaire (GEO).

8. Système de communication (10) selon l'une quelconque des revendications précédentes, dans lequel ledit signal hiérarchique modulé communiqué depuis ledit répéteur terrestre (14) apparaît comme une constellation de seize (16) multiplexages orthogonaux à division de fréquence (OFDM) avec modulation d'amplitude en quadrature (QAM).

9. Procédé (100) pour communiquer des signaux ayant un contenu différent sur la même fréquence de transmission, ledit procédé (100) comprenant :
la communication d'un premier signal (104) ayant un premier contenu à une fréquence de transmission depuis un premier satellite (12A) ;
la communication d'un second signal (106) ayant un second contenu à ladite fréquence de transmission depuis un second satellite (12B) ; et
la communication d'un signal hiérarchique modulé (108) provenant d'au moins un répéteur terrestre (14), dans lequel une composante hiérarchique primaire dudit signal hiérarchique modulé correspond audit second signal communiqué depuis ledit second satellite (12B), et une composante hiérarchique secondaire dudit signal hiérarchique modulé correspond audit premier signal communiqué depuis ledit premier satellite (12A) de telle sorte que ledit premier et ledit second signal sont communiqués à ladite même fréquence, l'angle d'élévation dudit premier satellite étant supérieur à l'angle d'élévation dudit second satellite à l'emplacement dudit au moins un répéteur terrestre.

10. Procédé (100) pour communiquer des signaux, selon la revendication 9, comprenant en outre les étapes consistant à :
recevoir un parmi ledit premier et ledit second signal (110) ; et
rejeter l'autre parmi ledit premier et ledit second signal (122) en fonction desdits angles d'élévation.

11. Procédé (100) pour communiquer des signaux selon les revendications 9 ou 10, dans lequel ledit premier et ledit second signal ont des polarisations différentes.

12. Procédé (100) pour communiquer des signaux, selon les revendications 9, 10 ou 11, dans lequel ledit premier satellite (12A) est un satellitaire en orbite elliptique (HEO).

13. Procédé (100) pour communiquer des signaux, selon l'une quelconque des revendications 9A 12, dans lequel ledit second satellite (12B) est un satellitaire géostationnaire (GEO).

14. Procédé (100) pour communiquer des signaux, selon l'une quelconque des revendications 9 à 13, dans lequel ledit signal hiérarchique modulé communiqué depuis ledit répéteur terrestre (14) apparaît comme une constellation de seize (16) multiplexages orthogonaux à division de fréquence (OFDM) avec modulation d'amplitude en quadrature (QAM).

15. Procédé (100) pour communiquer des signaux, selon l'une quelconque des revendications 9 à 14, dans lequel un répéteur (18) reçoit des signaux parmi ledit premier et ledit second signal (110), et il est utilisé avec un véhicule (19).
